# EUROPEAN PATENT SPECIFICATION

(11) **EP 4 212 746 B1**
(45) Date of publication and mention of the grant of the patent: **12.02.2025**
(21) Application number: 22151370.8
(22) Date of filing: 13.01.2022
(51) Int. Cl.: F16C 17/10, F16C 17/18, F16C 33/08, F16C 33/12, F16C 33/16, F16C 33/20, F16C 33/28

(54) **AN OSCILLATION BEARING ARRANGEMENT OF A MOBILE MINING MACHINE AND A MOBILE MINING MACHINE**
SCHWINGUNGSLAGERANORDNUNG EINER MOBILEN BERGBAUMASCHINE UND MOBILE BERGBAUMASCHINE
AGENCEMENT DE PALIER D'OSCILLATION DE MACHINE D'EXPLOITATION MINIÈRE MOBILE ET MACHINE D'EXPLOITATION MINIÈRE MOBILE

(43) Date of publication of application: 19.07.2023
(73) Proprietor: Sandvik Mining and Construction Oy, 33330 Tampere (FI)
(72) Inventor: Hickey, Kyle, Camarillo, 93012 (US)
(74) Representative: Sandvik

(56) References cited:
- DE-A1- 102017 223 370
- DE-A1- 102020 116 588
- DE-U1- 20 111 648
- US-A1- 2014 037 234

## Description

### FIELD OF THE INVENTION

The invention relates to an oscillation bearing arrangement of a mobile mining machine.

The invention relates also to a mobile mining machine.

### BACKGROUND OF THE INVENTION

Mobile mining machines, specifically articulated mobile mining machines, may be provided with a central oscillation. The central oscillation may allow a front frame and a rear frame of the mobile mining machine structure to move side to side relative to each other by a specific amount.

A central oscillation may be critical to improving stability of the mobile mining machine. It helps ensure that all four tires remain in contact with the ground on uneven terrain.

Various oscillation bearing arrangements have been introduced in connection with the central oscillation of mobile mining machines. However, their assembly may be complicated, or they may have rather low life. Some arrangements may be unsuitable for reversing loads or may be inherently prone to play an unwanted motion. Some arrangement may have very high costs, and high precision is needed in machined parts. Furthermore, some prior art arrangements may have bad performance in lubrication starvation conditions. Some prior art arrangements may be unsuitable for high loads or shock loads.
A mobile mining machine is for example known from US 2014/037234 A1.

### OBJECTIVE OF THE INVENTION

The objective of the invention is to alleviate the disadvantages mentioned above.

### SUMMARY

According to a first aspect, the present invention provides an oscillation bearing arrangement of a mobile mining machine, the oscillation bearing arrangement comprising: an inner frame structure, an outer frame structure, a first bearing structure and a second bearing structure arranged between the inner frame structure and the outer frame structure, wherein the oscillation bearing arrangement is arranged to allow a relative tilting movement between the inner frame structure and the outer frame structure.

According to the invention, the first bearing structure is a tapered plain bearing comprising a first bushing, and/or the second bearing structure is a tapered plain bearing comprising a second bushing.

According to the present invention, the mobile mining machine comprising a front frame, a rear frame and an articulated joint between the front frame and the rear frame. The mobile mining machine comprises an oscillation bearing arrangement according to any one of embodiments mentioned below or above alone or combined with other embodiments.

The technical effect is that the tapered plain bearing with bushings allow of adjustment of the system to eliminate play as the bushings wear.

The oscillation bearing arrangement and the mobile mining machine are characterized by what is stated in the independent claim.

According to the invention, the first bushing and/or the second bushing may be a tapered bushing. An advantage for tapered bushing is that tapered bushings allow of adjustment of the system to eliminate play as the bushings wear. A further advantage is that the tapered bushings allow for radial, moment and axial force reaction. In an embodiment, only two bushings may be needed. In a conventional prior art cylindrical bushing arrangement axial thrust bushings would be needed in addition to cylindrical bushings. In addition, high load capacity and shock durability may be achieved.

In an embodiment of the oscillation bearing arrangement, the first bushing and/or the second bushing may be made from one or more of the following: metal, graphite, plastic, or composite material. An advantage for this is that the bushing may be made from a material suitable for demanding environmental conditions. A further advantage is that the bushing may be made from a material suitable for lubrication starvation conditions.

In an embodiment of the oscillation bearing arrangement, the first bushing and/or the second bushing may be made from a composite polyester graphite material. An advantage is that the bearing is a low friction material and greaseless. A further advantage is that plain composite bushings have the best overall performance for shock and load durability.

According to the invention, an inner seat of the first bushing is arranged between the inner frame structure and the first bushing. An advantage is that by using the inner seat between the inner frame structure and the first bushing, properties of the inner seat may be optimized, and an easy adjustment of the bearing may be achieved.

According to the invention, an inner seat of the second bushing is arranged between the inner frame structure and the second bushing. An advantage is that by using the inner seat between the inner frame structure and the second bushing, properties of the inner seat may be optimized, and an easy adjustment of the bearing may be achieved.

In an embodiment of the oscillation bearing arrangement, the first bearing structure and/or the second bearing structure may be an adjustable bearing structure. An advantage is that an easy adjustment of the oscillating bearing arrangement may be achieved.

In an embodiment of the oscillation bearing arrangement, the inner seat of the first bushing or the inner seat of the second bushing may be adjustable in an axial direction. The tapered design of the bearings allows the bearings to be adjusted as wear occurs.

In an embodiment of the oscillation bearing arrangement, an adjusting member, such as a pin, may be arranged for adjusting the inner seat of the first bushing or the inner seat of the second bushing. In an embodiment, the adjusting member may be a pin provided with threads. An advantage is that the tapered design of the bearings may allow the bearings to be adjusted by tightening the pin, or by another adjusting member. In an embodiment, the pin, or other adjusting member, may extend through the tapered bearing or its part, such as a seat.

In an embodiment of the oscillation bearing arrangement, the inner seat of the first bushing and/or the inner seat of the second bushing may be a conical inner seat. An advantage for this is that tapered fits of the bearing seats into the corresponding structures may allow for reduction in tolerances and precision required in the fabrication. The conical seats may be pushed into an assembly in order to tighten the assembly for example on a normal service interval of the machine.

According to the invention, the oscillation bearing arrangement further comprises an outer seat for the first bushing and/or an outer seat for the second bushing. An advantage is that by using the outer seat between the outer frame structure and the first bushing and/or between the outer frame structure and the second bushing, properties of the outer seat may be optimized.

In an embodiment of the oscillation bearing arrangement, the first bushing and the second bushing may be arranged so that a second end of the first bushing is arranged towards a second end of the second bushing, wherein a diameter of the second end of the first bushing is smaller than a diameter of a first end of the first bushing, and wherein a diameter of the second end of the second bushing is smaller than a diameter of a first end of the second bushing. In an embodiment, the first bushing and the second bushing may be arranged so that a support flange may be between the first bushing and the second bushing. In an embodiment, the first bushing and the second bushing may be arranged coaxially. In an embodiment, the first tapered bushing and the second tapered bushing may be arranged so that a first end, a tapering end, of the first tapering bushing is arranged towards the first end, the tapering end, of the second tapering bushing. An advantage for this is that it may receive axial and radial loads effectively, and the assembly and its adjustment are easy to accomplish.

According to the invention, the inner seats are arranged on the inner frame structure and may be connected by a connecting bolt to the inner frame structure and the inner seats are arranged on the inner frame structure and may be connected by an adjustable pin to an end plate of the oscillation bearing arrangement.

According to the invention, the outer seat for the first bushing and the outer seat for the second bushing are connected to the outer frame structure, for example via a support flange arranged to the outer frame structure between the outer seat of the first bushing and the outer seat of the second bushing.

According to the invention, the inner frame structure is connected to the rear frame of the mobile mining machine and the outer frame structure is connected to the front frame of the mobile mining machine.

According to the invention, the mining machine comprises a front frame, a rear frame and an articulated joint between the front frame and the rear frame.

According to the invention, the mobile mining machine comprises an oscillation bearing arrangement.

The oscillation bearing arrangement may have several important advantages. Tapered bushings may allow of adjustment of the system to eliminate play as the bushings wear. The conical seat can be pushed into the assembly in order to tighten the assembly on a normal service interval.

The tapered bushings may allow for radial, moment and axial force reaction. Only two bushings may be needed. In a conventional cylindrical bushing arrangement, axial thrust bushings would be needed.

The tapered fits of the bearing seats into the corresponding structures may allow for reduction in tolerances and precision required in the fabrication.

The tapered plain bushing design may provide further benefits:
- High load capacity and shock durability. Plain composite bushings have the best overall performance for shock and load durability.
- Adjustability without overhaul. This allows for the free play to be removed at regular service intervals in order to maintain the best performance and extend the service life.
- Lower precision machining requirements when compared to roller element bearings.
- Lower overall cost than roller element bearings. These large roller bearings are very expensive and long lead time.
- Better performance in lubrication starvation conditions.
- Better performance in reversing load applications.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** is a cross section view of an embodiment of the oscillation bearing arrangement,
**Figure 2** is an exploded view of an embodiment of the oscillation bearing arrangement,
**Figure 3** is a perspective view of an embodiment of the oscillation bearing arrangement in a frame of a mobile mining machine, and
**Figure 4** is a side view of a mobile mining machine.

### DETAILED DESCRIPTION

In the following, all technical features introduced by the auxiliary verb "may" shall be considered as non-optional and as essential features for the invention, provided that these features are comprised in the independent claim 1.

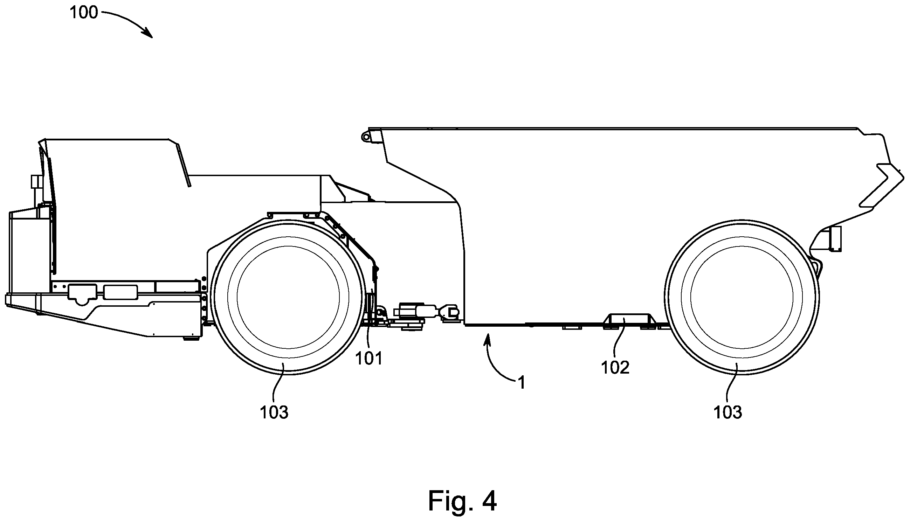

According to an aspect of the invention, the oscillation bearing arrangement described in this description may be arranged in a mobile machine 100. The mobile machine may be a mine machine, or a construction machine, e.g., a rock drilling rig, a development drill, a tunneling drilling machine, a surface drilling machine, a bolting or reinforcing vehicle, a rock removal machine, a longhole drill rig, an explosive charging machine, a loader, a dumper, a transport vehicle, a loading or hauling machine, setting vehicles of gallery arcs or nets, a concrete spraying machine, a crusher, or a measuring vehicle. In an embodiment, the mobile mining machine may be for underground mines or sites. Figure 4 shows one example of a mobile mining machine 100. The mobile mining machine may be a mining vehicle. In an embodiment, the mobile mining machine 100 may be equipped with a dump bed. The drive equipment may comprise one or more drive motors and one or more power transmission means for transmitting drive power to one or more wheels 103. The drive power transmission may comprise a mechanical gear system and mechanical power transmission members or, alternatively, the drive power transmission may be hydraulic or electric. In an embodiment, the drive motor may be a hub motor. In an embodiment, a powertrain of the mobile underground mining machine may comprise a hub motor arrangement. In an embodiment, the mobile mining machine may comprise wheels 103. In an embodiment, the wheels 103 may be arranged on a frame. In an embodiment of the mobile mining machine 100, the frame may comprise a front frame 101 and a rear frame 102. In an embodiment, at least one first pair of wheels 103 may be arranged on the front frame 101 so that at least one wheel may be arranged on a first side of the front frame and at least one second wheel may be arranged on the second side of the front frame, and that the front frame may be arranged between the first front wheel and the second front wheel. In an embodiment, at least one second pair of wheels 103 may be arranged on the rear frame 102 so that at least one wheel may be arranged on a first side of the rear frame 102 and at least one second wheel may be arranged on the second side of the rear frame, and that the rear frame 102 may be arranged between the first rear wheel and the second rear wheel. The front frame 101 and the rear frame 102 may be arranged to tilt in relation to each other around a rotational axis L. According to the invention, the rotational axis L isa longitudinal axis of the mobile mining machine 100. In an embodiment, the rotational axis L may be a main moving axis of the mobile mining machine 100. In an embodiment, wheels 103 of each pair of the wheels may be arranged on different sides of the rotational axis L. In an embodiment, this tilting movement may be called an oscillation. A central oscillation may allow a front frame and a rear frame of the mining machine structure to move side to side relative to each other by a specific amount. In an embodiment, the central oscillation may allow the front frame and the rear frame of the machine structure to move side to side relative to each other, for example by about +/-8 deg. The relative movement may vary depending on the application. Typically, the relative movement between the front frame and the rear frame may be side to side by about +/- 5 to 15 deg.

A central oscillation may be critical to improving stability of an articulated machine. It helps ensure that all tires, for example four tires, remain in contact with the ground on uneven terrain.

The mobile mining machine 100 of Figure 4 has four wheels 103. The number of wheels may vary and instead of wheels, there may be different kind of mechanism for moving, for example a track arrangement. In an embodiment, the mobile mining machine may comprise a frame comprising a front frame and a rear frame.

In an embodiment, a front part of the mobile mining machine and a rear part of the mobile mining machine may be arranged to turn in relation to each other and in relation to a vertical axis.

In an embodiment, the mobile mining machine may comprise an oscillation bearing arrangement 1. In an embodiment, the oscillation bearing arrangement 1 may comprise an inner frame structure 2 and an outer frame structure 3. In an embodiment, the inner frame structure 2 may be arranged to be connected to the rear frame 102, optionally via an oscillation frame structure. In an embodiment, the outer frame structure 3 may be connected to a structure of the front frame 101 or may be a part of the front frame 101. In an embodiment, the inner frame structure 2 and the outer frame structure 3 may be arranged to tilt in relation to each other. In an embodiment, the inner frame structure 2 and the outer frame structure 3 may be arranged to tilt relative to each other around the rotational axis L.

In an embodiment, the oscillation bearing arrangement 1 may comprise an inner frame structure 2, an outer frame structure 3, a first bearing structure and a second bearing structure. The first bearing structure may be a tapered plain bearing arranged between the inner frame structure 2 and the outer frame structure 3. In an embodiment, the second bearing structure may be a tapered plain bearing arranged between the inner frame structure 2 and the outer frame structure 3.

The oscillation bearing arrangement 1 may be arranged to allow a relative tilting movement between the inner frame structure 2 and the outer frame structure 3. In an embodiment, the oscillation bearing arrangement may be arranged to allow a relative movement between the inner frame structure 2 and the outer frame structure 3 around the rotational axis L.

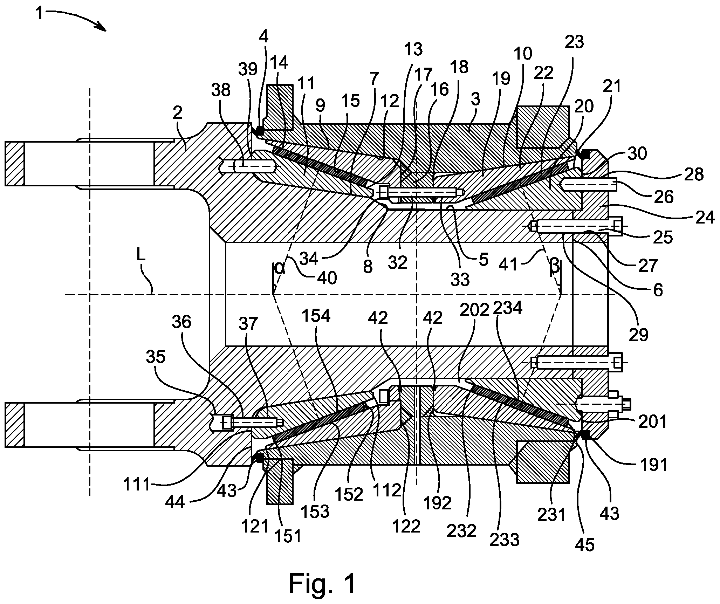

The first tapered bearing structure may comprise a first bushing 15. In an embodiment of Figure 1, the first bushing 15 may be a tapered bushing. A first end 151 of the first bushing 15 may have a first diameter D1. A second end 152 of the first bushing 15 may have a second diameter D2. In an embodiment, the first diameter D1 of the first end 151 of the first bushing 15 may be a larger diameter. In an embodiment, the second diameter D2 of the second end 152 of the first bushing 15 may be a smaller diameter. In an embodiment, a taper angle α (alpha) may be calculated: tan α (alpha)= (D1-D2)/2L, wherein D1 is larger diameter of tapered bushing (mm), D2 is smaller diameter of tapered bushing (mm), L is a length of tapered bushing (mm) and α (alpha) is an angle of taper. 2*α (alpha) is a full taper angle. In Figure 1, the tapering angle α (alpha) of the first bushing 15 is marked between a tapering line 40 and a line (normal) perpendicular to the rotational axis L.

The second tapered bearing structure may comprise a second bushing 23. In an embodiment of Figure 1, the second bushing 23 may be a tapered bushing. A first end 231 of the second bushing 23 may have a first diameter D1. A second end 232 of the second bushing 23 may have a second diameter D2. In an embodiment, the first diameter D1 of the first end 231 of the second bushing 23 may be a larger diameter. In an embodiment, the second diameter D2 of the second end 232 of the second bushing 23 may be a smaller diameter. In an embodiment, a taper angle β (beta) of the second bushing may be calculated: tan β (beta) = (D1-D2)/2L, wherein D1 is larger diameter of tapered bushing (mm), D2 is smaller diameter of tapered bushing (mm), L is a length of tapered bushing (mm) and β (beta) is an angle of taper. 2* β (beta) is a full taper angle. In Figure 1, the tapering angle β (beta) of the second bushing 23 is marked between a tapering line 41 and a line (normal) perpendicular to the rotational axis L.

In an embodiment, the first tapered bearing structure may comprise a tapered bushing 15 that is made of metal or composite material. In an embodiment, the second tapered bearing structure may comprise a tapered bushing 23 that is made of metal or composite material.

In an embodiment, the first tapered bearing structure may comprise a first tapered bushing 15 that is made of a composite polyester graphite material. In an embodiment, the second tapered bearing structure may comprise a second tapered bushing 23 that is made of a composite polyester graphite material.

The first tapered bearing structure may comprise at least one inner seat 11 between the inner frame structure 2 and the first bushing 15. In an embodiment, the at least one inner seat 11 may be a conical inner seat.

The second tapered bearing structure may comprise at least one inner seat 20 between the inner frame structure 2 and the second bushing 23. In an embodiment, the at least one inner seat 20 may be a conical inner seat.

In an embodiment, the inner seats may be made of metal. In an embodiment, the inner seats may be made of steel. In an embodiment, the inner seats may be made of hardened steel.

In an embodiment, the inner frame structure 2 may comprise a first support surface 4. In an embodiment of Figure 1, the first support surface 4 may extend from an outer surface of inner frame structure 2 a distance towards the rotational axis L in a transverse direction relating to the rotational axis L. In an embodiment of Figure 1, the first support surface 4 may extend from an outer surface of inner frame structure 2 a distance towards the rotational axis L in a plane perpendicular to the rotating axis L. The first support surface 4 may extend inwards from an outer surface of the inner frame structure 2. The first support surface 4 may form a shoulder for abutting a first end 111 of the inner seat 11 of the first bushing 15.

The inner frame structure 2 may comprise a second support surface 5. In an embodiment, the second support surface 5 may be a cylindrical surface. A diameter of the second support surface 5 may be smaller than the outer surface of the inner frame structure 2. The second support surface 5 may extend a distance from an end surface 6 of the inner frame structure 2 towards the first support surface 4. In an embodiment of Figure 1, a third support surface 7 may be arranged between the second support surface 5 and the first support surface 4.

The first support surface 4 may join in its inner end to the third support surface 7. The third support surface 7 may be formed between the first support surface 4 and the second support surface 5. The third support surface 7 may taper from the first support surface 4 towards the second support surface 5. Between the second support surface 5 and the third support surface 7 may be arranged a transitional surface 8.

The oscillation bearing arrangement 1 may be arranged on the second support surface 5 and the third support surface 7 of the inner frame structure 2. The oscillation bearing arrangement 1 may be arranged on the inner frame structure 2 on the second support surface 5 and third support surface 7, and between the first support surface 4 and an end plate 24. The end plate 24 may be arranged to the end 6 of the inner frame structure 2.

In an embodiment, the second support surface 5 may form a seat to the inner seat 21 of the second bushing 23.

In an embodiment, the third support surface 7 may form a seat to the inner seat 11 of the first bushing 15.

In an embodiment, at least one inner seat, the inner seat 11 of the first bushing 15 or the inner seat 21 of the second bushing 23, may be adjustable in an axial direction. The adjustable inner seat may allow tightening of the oscillation bearing arrangement 1. In an embodiment, the at least one inner seat may be arranged to be adjusted in an axial direction on the support surface of the inner frame structure 2.

In an embodiment of Figure 1, the inner seat 11 of the first bushing 15 may be arranged to be connected to the inner frame structure 2. In an embodiment, openings or blind holes 37, 39 may be arranged on the inner seat 11. In an embodiment, the blind holes 37, 39 may be arranged on the first end 111 of the inner seat 11 facing to the first support surface 4 of the inner frame structure 2. In an embodiment, the blind holes may be arranged and divided on a circle on the first end 111 of the inner seat 11 of the first bushing 15. A plurality of the blind holes 37 may be arranged with threads. A connecting bolt 36 may be arranged from a boring 35 of the inner frame structure 2 to the blind hole 37 for connecting the inner seat 11 to the inner frame structure 2. Some of the blind holes 39 may be arranged to receive a pin 38. Pins 38 and connecting bolts 36 may connect the inner seat 11 of the first bushing 15 to the inner frame structure 2.

The oscillation bearing arrangement 1 may further comprise an outer seat 12 for the first bushing 15. The outer seat 12 for the first bushing 15 may comprise an outer seat surface 14. The first bushing 15 may be a tapered bushing. The first bushing 15 may be arranged between the inner seat surface 13 of inner seat 11 of the first bushing 15 and the outer seat surface 14 of the outer seat 12 of the first bushing 15. An outer side surface 153 of the first bushing 15 may be arranged facing the outer seat surface 14 of the outer seat 12. An inner side surface 154 of the first bushing 15 may be arranged facing the inner seat surface 13 of the inner seat 11.

The oscillation bearing arrangement 1 may further comprise an outer seat 19 for the second bushing 23. The outer seat 19 for the second bushing 23 may comprise an outer seat surface 22. The second bushing 23 may be a tapered bushing. The second bushing 23 may be arranged between the inner seat surface 21 of the inner seat 20 of the second bushing 23 and the outer seat surface 22 of the outer seat 19 of the second bushing 23. An outer side surface 233 of the second bushing 23 may be arranged facing the outer seat surface 22 of the outer seat 19. An inner side surface 234 of the second bushing 23 may be arranged facing the inner seat surface 21 of the inner seat 20.

In an embodiment, the outer seats may be made of metal. In an embodiment, the outer seats may be made of steel. In an embodiment, the outer seats may be made of hardened steel.

The first bushing 15 and the second bushing 23 may be arranged so that the second end 152 of the first bushing 15 may be arranged next to the second end 232 of the second bushing 23. In an embodiment, the second end 152 of the first bushing 15 may have the diameter D2 that is smaller than the diameter D1 of the first end 151 of the first bushing 15. In an embodiment, the second end 232 of the second bushing 23 may have the diameter D2 that is smaller than the diameter D1 of the first end 231 of the second bushing 23.

In an embodiment, an outer frame structure 3 may comprise a through hole from a first side of the outer frame structure 3 to a second side of the outer frame structure 3. The through hole of the outer frame structure 3 may be arranged for receiving a portion of the inner frame structure 2 and the oscillation bearing arrangement 1 for enabling relative rotational movement of the outer frame structure 3 and the inner frame structure 2.

The outer frame structure 3 may comprise a support flange 16 arranged to extend from an inner surface of the outer frame structure 3. In an embodiment, the support flange 16 may be arranged between a first outer support surface 9 and a second outer support surface 10. The outer seat 12 of the first bushing 15 may be arranged on the first outer support surface 9. The outer seat 19 of the second bushing 23 may be arranged on the second outer support surface 10.

In an embodiment of Figure 1, the outer seat 12 of the first bushing 15 may be connected to the outer frame structure 3 or may be a part of the outer frame structure 3. The outer seat 19 of the second bushing 23 may be connected to the outer frame structure 3. In an embodiment, a through hole 32 may be arranged through the support flange 16. In an embodiment, a support portion may be arranged on the outer seat 19 of the first bushing 15. In an embodiment, a through hole 31 may be arranged through the support portion of the outer seat 12 of the first bushing 15. In an embodiment, a blind hole 33, optionally with threads, may be arranged in the outer seat 19 of the second bushing 23. In an embodiment, a connecting bolt 34 may be arranged to connect the outer seat 12 of the first bushing 15 and the outer seat 19 of the second bushing 23 to the outer frame structure 3. In an embodiment of Figure 1, the connecting bolt 34 may be arranged to extend from a first side of the support portion of the outer seat 12 of the first bushing 15 through the through hole and through the through hole 32 of the support flange 16 to the blind hole 33 with threads of the outer seat 19 of the second bushing 23. By tightening the connecting bolt 34, the outer seat 12 of the first bushing 15 and the outer seat 19 of the second bushing 23 tighten against the support flange 16.

In an embodiment, a plurality of through holes 32 may be arranged in the support flange 16. In an embodiment, the plurality of through holes 32 may be arranged and divided on a circle on the support flange 16. A plurality of blind holes 33 may be arranged with threads. Some of the blind holes 33 may be arranged to receive a pin. Pins and connecting bolts 34 may connect the outer seat 12 of the first bushing 15 and the outer seat 19 of the second bushing 23 to the outer frame structure 3. In an embodiment, a first seal 42, such as an O-ring, may be arranged between the outer seat 12 of the first bushing 15 and the support flange 16. In an embodiment, a first seal 42, such as an O-ring, may be arranged between the outer seat 19 of the second bushing 23 and the support flange 16.

In an embodiment, the inner seat 11 of the first bushing 15 or the inner seat 20 of the second bushing 23 may be arranged on the inner frame structure 2 and connected by a locking screw to the inner frame structure 2 and the other of the inner seats 11 and 20. The inner seat 20 of the second bushing 23 may be arranged on the inner frame structure 2 and connected by an adjustable screw 26 to the end plate 24 of the oscillation bearing arrangement 1. In an embodiment, the pin 26 may be arranged with an adjustment device or the pin 26 may be an adjustment screw. In an embodiment of Figure 1, the inner seat 20 of the second bushing 23 may be adjustable in an axial direction. In an embodiment, the inner seat 20 of the second bushing 23 may be arranged to be adjustable in relation to the end plate 24.

In an embodiment, the end plate 24 may be arranged to the end surface of the inner frame structure 2. In an embodiment, the end plate 24 may be arranged to the end of the inner frame structure 2 with connecting bolts 25. In an embodiment, blind holes 29 with threads may be arranged on the end surface 6 of the inner frame structure 2. The end plate 24 may be provided with through holes 27. Connecting bolts 25 may be arranged to extend from an outer side of the end plate 24 through the through holes 27 and into the blind holes 29 with threads for connecting the end plate 24 to the end surface 6 of the inner frame structure 2. In an embodiment, the end plate 24 may be made of metal. In an embodiment, the end plate 24 may be made of steel.

In an embodiment, the end plate 24 may extend a distance in a radial direction from the end surface 6 of the inner frame structure 2 to the outer frame structure 3. In an embodiment, a second seal 43, such as a lip seal, may be arranged on the end plate 24 between the end plate 24 and the outer frame structure 3. In an embodiment, a second seal 43, such as a lip seal, may be arranged also between the support surface 4 of the inner frame structure 2 and the outer frame structure 3.

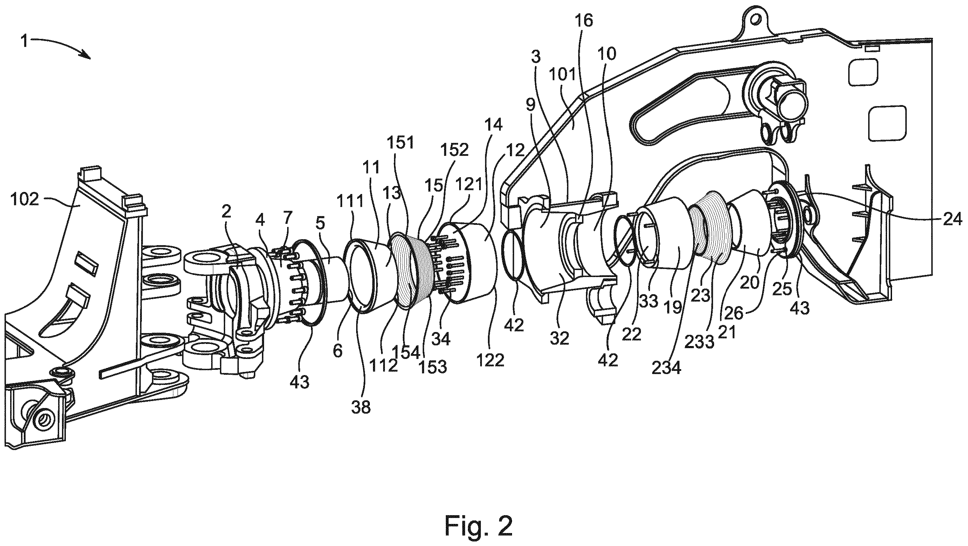

Parts of the oscillation bearing arrangement 1 may be seen clearer in Figure 2 that is an exploded view of an embodiment of the oscillation bearing arrangement 1 arranged with a frame structure of a mobile mining machine 100. The oscillation bearing arrangement 1 may be arranged in the frame structure between the front frame 101 and the rear frame 102.

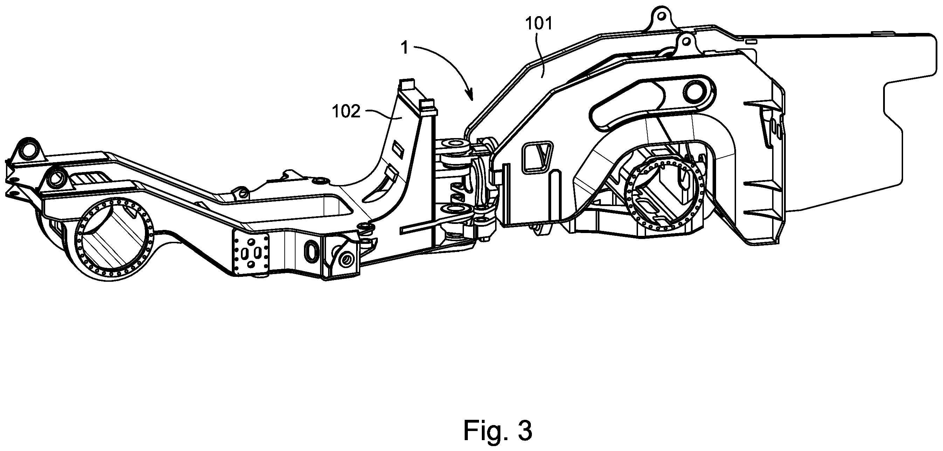

Figure 3 illustrates an embodiment of the oscillation bearing arrangement 1 with the frame structure of the mobile mining machine 100. The oscillation bearing arrangement 1 may be arranged between the front frame 101 and the rear frame 102 of the mobile mining machine 100.

An example of the mobile mining machine 100 with a frame structure comprising an oscillation bearing arrangement 1 with at least some of the features mentioned above is illustrated in Figure 4. In an embodiment, the mobile mining machine 100 may comprise an articulated joint between the front frame 101 and the rear frame 102. In an embodiment, the mobile mining machine 100 may comprise an oscillation bearing arrangement according to any one of the embodiments mentioned above alone or in combination with other embodiments.

The invention is defined by the appended claims.

### REFERENCE SYMBOLS

1 Oscillation bearing arrangement
2 Inner frame structure
3 Outer frame structure
4 First support surface of the inner frame 2
5 Second support surface of the inner frame 2
6 End surface of the inner frame 2
7 Third support surface
8 Transitional surface
9 First outer support surface
10 Second outer support surface
11 Inner seat of a first bushing
12 Outer seat of a first bushing
13 Inner seat surface
14 Outer seat surface
15 First bushing
16 Support flange
17 First surface of the support flange
18 Second surface of the support flange
19 Outer seat of a second bushing
20 Inner seat of a second bushing
21 Inner seat surface
22 Outer seat surface
23 Second bushing
24 End plate
25 Connecting bolt
26 Pin
27 First through hole
28 Second through hole
29 Blind hole with threads
30 Blind hole
31 Through hole
32 Through hole
33 Blind hole
34 Connecting bolt
35 Bore
36 Connecting bolt
37 Blind hole with threads
38 Pin
39 Blind hole
40 Tapering line of the first bushing
41 Tapering line of the second bushing
42 First seal
43 Second seal
44 First end surface of the outer frame structure
45 Second end surface of the outer frame structure
100 Mobile mining machine
101 Front frame
102 Rear frame
103 Wheel
111 First end of the inner seat of the first bushing
112 Second end of the inner seat of the first bushing
121 First end of the outer seat of the first bushing
122 Second end of the outer seat of the first bushing
151 First end of the first bushing
152 Second end of the first bushing
153 Outer side surface of the first bushing
154 Inner side surface of the first bushing
191 First end of the outer seat of the second bushing
192 Second end of the outer seat of the second bushing
201 First end of the inner seat of the second bushing
202 Second end of the inner seat of the second bushing
231 First end of the second bushing
232 Second end of the second bushing
233 Outer side surface of the second bushing
234 Inner side surface of the second bushing
L Rotational axis
α (alpha) Tapering angle of the first bushing
β (beta) Tapering angle of the second bushing

## Claims

1. A mobile mining machine (100) comprising a front frame (101), a rear frame (102), and an articulated joint between the front frame (101) and the rear frame (102), the mobile mining machine (100) comprising an oscillation bearing arrangement (1), the oscillation bearing arrangement (1) comprising:
an inner frame structure (2) connected to the rear frame (102) of the mobile mining machine (100);
an outer frame structure (3) connected to the front frame (101) of the mobile mining machine (100);
a first bearing structure arranged between the inner frame structure (2) and the outer frame structure (3), the first bearing structure is a tapered plain bearing comprising a first bushing (15), a first inner seat (11) arranged between the inner frame structure (2) and the first bushing (15), and a first outer seat (12) arranged between the outer frame structure (3) and the first bushing (15);
a second bearing structure arranged between the inner frame structure (2) and the outer frame structure (3), the second bearing structure is a tapered plain bearing comprising a second bushing (23), a second inner seat (20) arranged between the inner frame structure (2) and the second bushing (23), and a second outer seat (19) arranged between the outer frame structure (3) and the second bushing (23);
wherein the oscillation bearing arrangement is arranged to allow a relative tilting movement between the inner frame structure (2) and the outer frame structure (3) along a longitudinal axis of the mobile mining machine (100).

2. The mobile mining machine (100) according to claim 1, wherein the outer frame structure (3) comprises a support flange (16) extending from an inner surface of the outer frame structure (3), and wherein the first outer seat (12) and the second outer seat (19) are connected to the support flange (16) of the outer frame structure (3).

3. The mobile mining machine (100) according to claim 2, wherein the first outer seat (12) and the second outer seat (19) are connected to the support flange (16) of the outer frame structure (3) via connecting bolts (34).

4. The mobile mining machine (100) according to any one of claims 1 to 3, wherein the oscillation bearing arrangement (1) further comprises an end plate (24) connected to an end surface (6) of the inner frame structure (2), and wherein the second inner seat (20) is connected to the end plate (24) with adjustment screws (26).

5. The mobile mining machine (100) according to claim 4, wherein the second inner seat (20) is adjustable in an axial direction in relation to the end plate (24) via the adjustment screws (26).

6. The mobile mining machine (100) according to any one of claims 1 to 5, wherein the first inner seat (11) is connected to the inner frame structure (2) .

7. The mobile mining machine (100) according to any one of claims 1 to 6, wherein the first inner seat (11) is a first conical inner seat, and wherein the second inner seat (20) is a second conical inner seat.

8. The mobile mining machine (100) according to any one of claims 1 to 7, wherein the first bushing (15) is a first tapered bushing, and wherein the second bushing (23) is a second tapered bushing.

9. The mobile mining machine (100) according to any one of claims 1 to 8, wherein the first bushing (15) and the second bushing (23) are arranged so that a second end (152) of the first bushing (15) is arranged towards a second end (232) of the second bushing (23), wherein a diameter (D2) of the second end (152) of the first bushing (15) is smaller than a diameter (D1) of a first end (151) of the first bushing (15), and wherein a diameter (D2) of the second end (232) of the second bushing (23) is smaller than a diameter (D1) of a first end (231) of the second bushing (23) .

10. The mobile mining machine (100) according to any one of claims 1 to 9, wherein the first bushing (15) and/or the second bushing (23) is made from one or more of the following: metal, graphite, plastic, or composite material.

11. The mobile mining machine (100) according to any one of claims 1 to 9, wherein the first bushing (15) and/or the second bushing (23) is made from a composite polyester graphite material.

## Patentansprüche

1. Mobile Bergbaumaschine (100), die einen Vorderrahmen (101), einen Hinterrahmen (102) und eine Gelenkkupplung zwischen dem Vorderrahmen (101) und dem Hinterrahmen (102) umfasst, wobei die mobile Bergbaumaschine (100) eine Schwingungslageranordnung (1) umfasst, wobei die Schwingungslageranordnung (1) Folgendes umfasst:
eine innere Rahmenkonstruktion (2), die mit dem Hinterrahmen (102) der mobilen Bergbaumaschine (100) verbunden ist;
eine äußere Rahmenkonstruktion (3), die mit dem Vorderrahmen (101) der mobilen Bergbaumaschine (100) verbunden ist;
eine erste Lagerkonstruktion, die zwischen der inneren Rahmenkonstruktion (2) und der äußeren Rahmenkonstruktion (3) angeordnet ist, wobei die erste Lagerkonstruktion ein verjüngtes Gleitlager ist, das eine erste Buchse (15), einen ersten inneren Sitz (11), der zwischen der inneren Rahmenkonstruktion (2) und der ersten Buchse (15) angeordnet ist, und einen ersten äußeren Sitz (12) umfasst, der zwischen der äußeren Rahmenkonstruktion (3) und der ersten Buchse (15) angeordnet ist;
eine zweite Lagerkonstruktion, die zwischen der inneren Rahmenkonstruktion (2) und der äußeren Rahmenkonstruktion (3) angeordnet ist, wobei die zweite Lagerkonstruktion ein verjüngtes Gleitlager ist, das eine zweite Buchse (23), einen zweiten inneren Sitz (20), der zwischen der inneren Rahmenkonstruktion (2) und der zweiten Buchse (23) angeordnet ist, und einen zweiten äußeren Sitz (19), der zwischen der äußeren Rahmenkonstruktion (3) und der zweiten Buchse (23) angeordnet ist, umfasst;
wobei die Schwingungslageranordnung so angeordnet ist, dass sie eine relative Kippbewegung zwischen der inneren Rahmenkonstruktion (2) und der äußeren Rahmenkonstruktion (3) entlang einer Längsachse der mobilen Bergbaumaschine (100) ermöglicht.

2. Mobile Bergbaumaschine (100) nach Anspruch 1, wobei die äußere Rahmenkonstruktion (3) einen Stützflansch (16) umfasst, der sich von einer Innenfläche der äußeren Rahmenkonstruktion (3) erstreckt, und wobei der erste äußere Sitz (12) und der zweite äußere Sitz (19) mit dem Stützflansch (16) der äußeren Rahmenkonstruktion (3) verbunden sind.

3. Mobile Bergbaumaschine (100) nach Anspruch 2, wobei der erste äußere Sitz (12) und der zweite äußere Sitz (19) über Verbindungsbolzen (34) mit dem Stützflansch (16) der äußeren Rahmenkonstruktion (3) verbunden sind.

4. Mobile Bergbaumaschine (100) nach einem der Ansprüche 1 bis 3, wobei die Schwingungslageranordnung (1) weiter eine Endplatte (24) umfasst, die mit einer Endfläche (6) der inneren Rahmenkonstruktion (2) verbunden ist, und wobei der zweite innere Sitz (20) mit der Endplatte (24) über Stellschrauben (26) verbunden ist.

5. Mobile Bergbaumaschine (100) nach Anspruch 4, wobei der zweite innere Sitz (20) über die Stellschrauben (26) in einer axialen Richtung gegenüber der Endplatte (24) verstellbar ist.

6. Mobile Bergbaumaschine (100) nach einem der Ansprüche 1 bis 5, wobei der erste innere Sitz (11) mit der inneren Rahmenkonstruktion (2) verbunden ist.

7. Mobile Bergbaumaschine (100) nach einem der Ansprüche 1 bis 6, wobei der erste innere Sitz (11) ein erster konischer innerer Sitz ist, und wobei der zweite innere Sitz (20) ein zweiter konischer innerer Sitz ist.

8. Mobile Bergbaumaschine (100) nach einem der Ansprüche 1 bis 7, wobei die erste Buchse (15) eine erste verjüngte Buchse ist, und wobei die zweite Buchse (23) eine zweite verjüngte Buchse ist.

9. Mobile Bergbaumaschine (100) nach einem der Ansprüche 1 bis 8, wobei die erste Buchse (15) und die zweite Buchse (23) so angeordnet sind, dass ein zweites Ende (152) der ersten Buchse (15) zu einem zweiten Ende (232) der zweiten Buchse (23) hin angeordnet ist, wobei ein Durchmesser (D2) des zweiten Endes (152) der ersten Buchse (15) kleiner ist als ein Durchmesser (D1) eines ersten Endes (151) der ersten Buchse (15), und wobei ein Durchmesser (D2) des zweiten Endes (232) der zweiten Buchse (23) kleiner ist als ein Durchmesser (D1) eines ersten Endes (231) der zweiten Buchse (23).

10. Mobile Bergbaumaschine (100) nach einem der Ansprüche 1 bis 9, wobei die erste Buchse (15) und/oder die zweite Buchse (23) aus einem oder mehreren der folgenden Materialien hergestellt ist: Metall, Graphit, Kunststoff oder Verbundwerkstoff.

11. Mobile Bergbaumaschine (100) nach einem der Ansprüche 1 bis 9, wobei die erste Buchse (15) und/oder die zweite Buchse (23) aus einem Polyester-Graphit-Verbundwerkstoff hergestellt ist.

## Revendications

1. Machine d'exploitation minière mobile (100) comprenant un châssis avant (101), un châssis arrière (102) et une articulation entre le châssis avant (101) et le châssis arrière (102), la machine d'exploitation minière mobile (100) comprenant un agencement de palier d'oscillation (1), l'agencement de palier d'oscillation (1) comprenant :
une structure de châssis interne (2) reliée au châssis arrière (102) de la machine d'exploitation minière mobile (100) ;
une structure de châssis externe (3) reliée au châssis avant (101) de la machine d'exploitation minière mobile (100) ;
une première structure de palier agencée entre la structure de châssis interne (2) et la structure de châssis externe (3), la première structure de palier est un palier lisse effilée comprenant une première bague (15), un premier siège interne (11) agencé entre la structure de châssis interne (2) et la première bague (15), et un premier siège externe (12) agencé entre la structure de châssis externe (3) et la première bague (15) ;
une seconde structure de palier agencée entre la structure de châssis interne (2) et la structure de châssis externe (3), la seconde structure de palier est un palier lisse effilé comprenant une seconde bague (23), un second siège interne (20) agencé entre la structure de châssis interne (2) et la seconde bague (23), et un second siège externe (19) agencé entre la structure de châssis externe (3) et la seconde bague (23) ;
dans laquelle l'agencement de palier d'oscillation est agencé pour permettre un mouvement d'inclinaison relatif entre la structure de châssis interne (2) et la structure de châssis externe (3) le long d'un axe longitudinal de la machine d'exploitation minière mobile (100).

2. Machine d'exploitation minière mobile (100) selon la revendication 1, dans laquelle la structure de châssis externe (3) comprend une bride de support (16) s'étendant depuis une surface interne de la structure de châssis externe (3) et dans laquelle le premier siège externe (12) et le second siège externe (19) sont reliés à la bride de support (16) de la structure de châssis externe (3).

3. Machine d'exploitation minière mobile (100) selon la revendication 2, dans laquelle le premier siège externe (12) et le second siège externe (19) sont reliés à la bride de support (16) de la structure de châssis externe (3) par le biais de boulons de liaison (34).

4. Machine d'exploitation minière mobile (100) selon l'une quelconque des revendications 1 à 3, dans laquelle l'agencement de palier d'oscillation (1) comprend en outre une plaque d'extrémité (24) reliée à une surface d'extrémité (6) de la structure de châssis interne (2) et dans laquelle le second siège interne (20) est relié à la plaque d'extrémité (24) avec des vis de réglage (26).

5. Machine d'exploitation minière mobile (100) selon la revendication 4, dans laquelle le second siège interne (20) est réglable dans une direction axiale par rapport à la plaque d'extrémité (24) par le biais des vis de réglage (26).

6. Machine d'exploitation minière mobile (100) selon l'une quelconque des revendications 1 à 5, dans laquelle le premier siège interne (11) est relié à la structure de châssis interne (2).

7. Machine d'exploitation minière mobile (100) selon l'une quelconque des revendications 1 à 6, dans laquelle le premier siège interne (11) est un premier siège interne conique et dans laquelle le second siège interne (20) est un second siège interne conique.

8. Machine d'exploitation minière mobile (100) selon l'une quelconque des revendications 1 à 7, dans laquelle la première bague (15) est une première bague effilée et dans laquelle la seconde bague (23) est une seconde bague effilée.

9. Machine d'exploitation minière mobile (100) selon l'une quelconque des revendications 1 à 8, dans laquelle la première bague (15) et la seconde bague (23) sont agencées de telle sorte qu'une seconde extrémité (152) de la première bague (15) soit agencée vers une seconde extrémité (232) de la seconde bague (23), dans laquelle le diamètre (D2) de la seconde extrémité (152) de la première bague (15) est plus petit qu'un diamètre (D1) d'une première extrémité (151) de la première bague (15), et dans laquelle le diamètre (D2) de la seconde extrémité (232) de la seconde bague (23) est plus petit qu'un diamètre (D1) d'une première extrémité (231) de la seconde bague (23).

10. Machine d'exploitation minière mobile (100) selon l'une quelconque des revendications 1 à 9, dans laquelle la première bague (15) et/ou la seconde bague (23) sont composées d'un ou de plusieurs des éléments suivants : métal, graphite, plastique ou matériau composite.

11. Machine d'exploitation minière mobile (100) selon l'une quelconque des revendications 1 à 9, dans laquelle la première bague (15) et/ou la seconde bague (23) sont composées d'un matériau composite polyester-graphite.
